# EUROPEAN PATENT APPLICATION

(11) **EP 1 560 042 A2**
(43) Date of publication of application: **03.08.2005**
(21) Application number: 05100534.6
(22) Date of filing: 27.01.2005
(51) Int. Cl.: G01V 1/00

(54) **Sensor for detecting vibrations, particularly seismic waves**

(30) Priority: 02.02.2004 IT TV20040012
(71) Applicant: SERITA S.R.L., 31046 ODERZO (TV) (IT)
(72) Inventor: PERISSINOTTO, Giuseppe, 31046, ODERZO TV (IT)
(74) Representative: Modiano, Guido, Dr.-Ing.

(57) **Abstract**

A sensor (1) for detecting vibrations, particularly seismic waves, which is constituted by a container (2), on an upper face (2a) of which there is a concave seat (3) that has a circular plan shape and can be closed in an upper region by means of a lid. On the bottom of the seat there is at least one first circuit (7), which is constituted by two tracks (7a, 7b), made of conducting material and arranged along mutually concentric circles, which are coaxial to the axis of the cavity and are kept mutually apart. The sensor further comprises a contact body (17) made of electrically conducting material, which is free to move along the bottom, the surface with which the contact body rests on the bottom being larger than the mutual distance between the tracks of the at least one pair of tracks.

## Description

The present invention relates to a sensor for detecting vibrations, particularly seismic waves.

Earthquakes have always been a factor of extreme danger for human beings, since these phenomena often generate an amount of energy, in the form of undulatory or sussultatory movements of the earth's crust, that is capable of causing extremely severe damage to buildings and injury to people.

The need to reduce the consequences of a seismic event has given rise to a thorough series of studies aimed at describing their evolution and at interpreting the mechanisms according to which they occur, in order to locate the geographical areas that are more exposed to this kind of risk and study adequate countermeasures.

In most cases, the seismic event has, during its occurrence, an intensity that increases over time until it reaches a peak, subsequently decreasing again.

It is therefore extremely useful to be able to detect these movements in their initial phase, so as to be able to adopt the necessary countermeasures suitable to reduce the consequences of the event.

One must also take into account the fact that in many cases the time period over which the phenomenon finishes is very limited, and accordingly the swiftness with which it is detected and with which the alarm is given becomes crucially important.

Analysis of seismic phenomena is generally conducted with the aid of dedicated scientific means, which are capable of detecting the amplitude of the vibrations generated by a seismic phenomenon.

Known kinds of seismograph are currently in use in seismological centers distributed almost throughout the world and are constituted by a pen mounted at an end of a thin rod, which during an even minimal oscillating movement of the earth's crust amplifies this impulse, which is recorded on paper by means of said pen.

By way of accurate calibration, these known seismographs are capable of providing a signal that is proportional to the amount of energy released by the seismic phenomenon, which can be assessed by means of appropriate scales.

The main drawback of these known kinds of seismograph is that in order to detect the undulatory components along a plurality of directions and at various wavelengths they are complicated and accordingly onerous to manufacture.

Another drawback of these seismographs is that their calibration must be performed very accurately, allowing their practical use only in specialized laboratories.

The study of these phenomena also uses instruments of a known type that comprise one or more accelerometers, transducers capable of providing a generally electrical signal that is proportional to the acceleration that they undergo.

The main drawback of these known types of instrument is that each accelerometer is capable of providing a signal related to an acceleration along a single direction, so that it is necessary to use at least three of these transducers in order to compose the acceleration imparted to the instrument in space.

A device for sensing vibrations, particularly seismic waves, is also known which is constituted by a pendulum, capable of detecting an undulatory motion along any direction of a horizontal plane by oscillating with an amplitude that is directly proportional to its intensity.

The main drawback of this known pendulum is that in order to make its operation reliable and its indications detectable, it must be manufactured very accurately and be large, accordingly limiting its use only to specialized laboratories.

The aim of the present invention is to solve the above-mentioned problems, eliminating the drawbacks of the cited background art, by providing a sensor for detecting vibrations, particularly seismic waves, which is capable of providing a signal that derives from the sensing of an acceleration imparted thereto along any direction of a plane.

Within this aim, an object of the invention is to provide a sensor that is constructively simple, has reduced dimensions, and whose calibration can be performed easily, so as to allow its reliable use outside of specialized laboratories, for example in a domestic environment, in public buildings or for industrial applications.

Another object is to provide a sensor that is capable of offering an immediate response to a force that originates externally.

Another object is to provide a sensor that supplies a signal that is proportional to the intensity of the force applied thereto.

Another object is to provide a sensor that is structurally simple and has low manufacturing costs.

This aim and these and other objects that will become better apparent hereinafter are achieved by a sensor for detecting vibrations, particularly seismic waves, characterized in that it is constituted by a container, on an upper face of which there is a concave seat that has a circular plan shape and can be closed in an upper region by means of a lid, and on the bottom of which there is at least one first circuit, which is constituted by at least two tracks, made of conducting material and arranged along mutually concentric circles, which are coaxial to the axis of said cavity and are kept mutually apart, a contact body made of electrically conducting material being free to move along said bottom, the surface with which said contact body rests on said bottom being larger than the mutual distance between the tracks of said at least two tracks.

Further characteristics and advantages of the invention will become better apparent from the following detailed description of a particular but not exclusive embodiment thereof, illustrated by way of non-limiting example in the accompanying drawings, wherein:

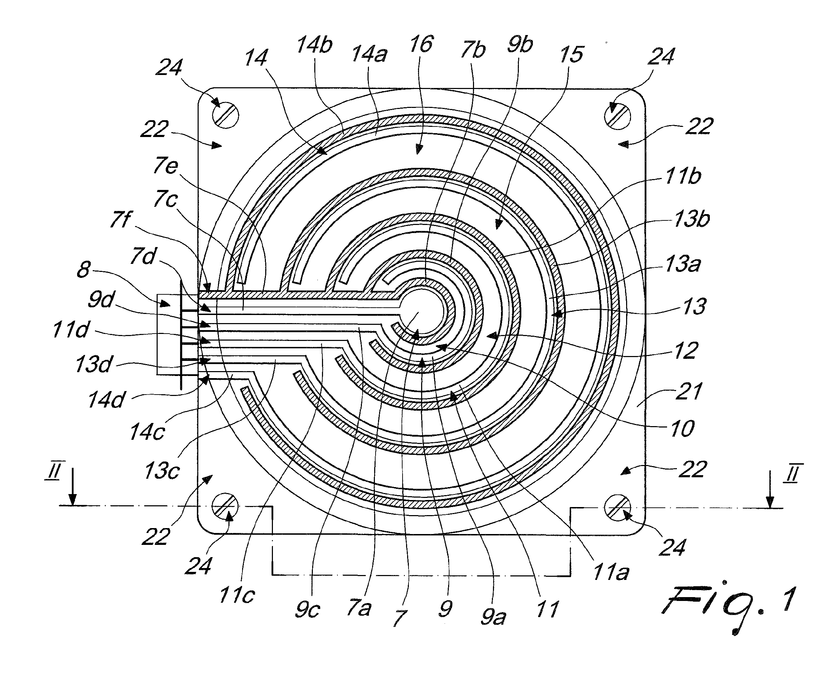

Figure 1 is a top view of the invention, in which the lid is not shown for the sake of better comprehension;

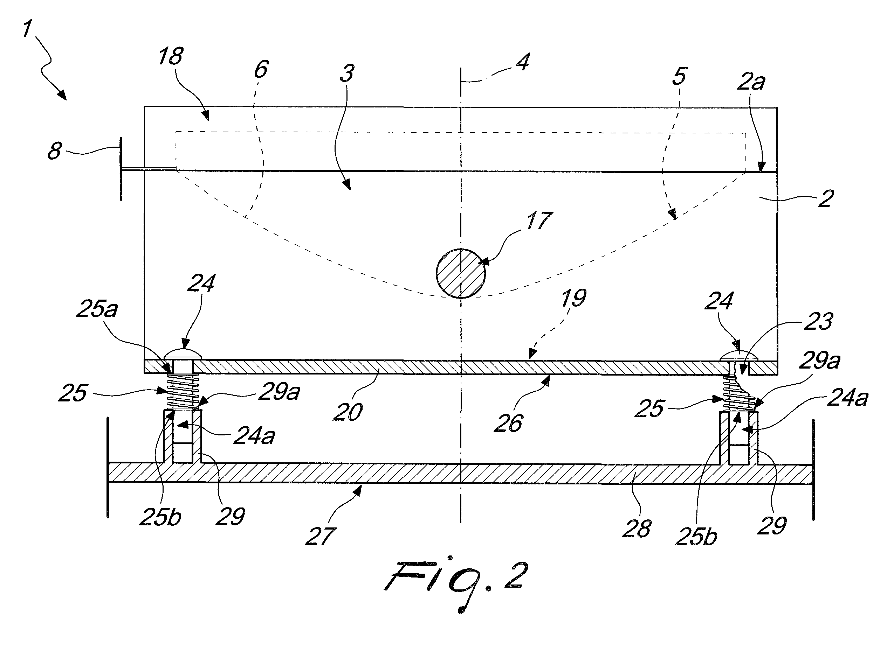

Figure 2 is a sectional view, taken along the line II-II of Figure 1, of the sensor according to the invention;

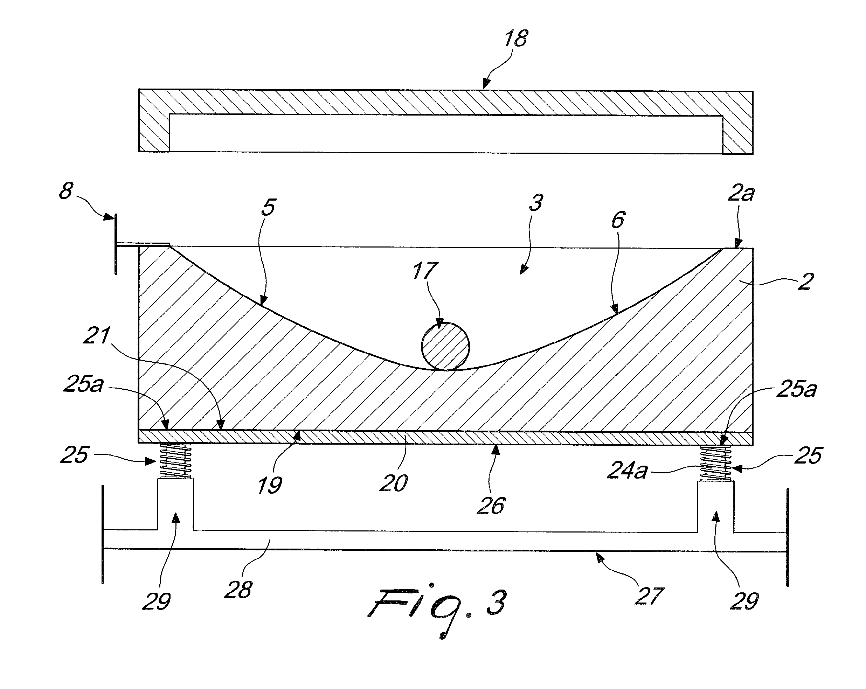

Figure 3 is a partially exploded transverse sectional view of the sensor.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 designates a sensor according to the invention, which is constituted by a container 2, which is for example cylindrical or parallelepipedal and is made of electrically insulating and preferably transparent material, for example plastic material.

A concave seat 3 having a circular plan shape is formed on an upper face 2a of the container, is open upward and is arranged so that its axis 4 lies in a vertical direction.

The bottom 5 of the seat 3 can be obtained by rotating, about the axis 4, a radial profile 6, the lowest point of which is located at said axis 4.

The radial profile 6 can be straight, in which case the seat 3 assumes a conical shape, or can be curved, thus providing a seat 3 that can assume various shapes depending on the curvature of said profile.

The radial profile 6 can be constituted for example by a single circular arc, so as to provide a seat 3 that has the shape of a spherical dome.

In a second possible embodiment, the radial profile is formed by joining two or more portions of circles having different radii, which are adequately blended together.

It is equally advantageous to provide such profile by using curves having a variable radius, such as for example parabolic or hyperbolic arcs, which can be also mutually blended together, or circular arcs having different radii, in order to obtain the intended configuration of said profile.

As will become better apparent hereinafter, the definition of the radial profile 6 of the bottom 5 of the seat 3 is fundamentally important in order to obtain the intended characteristics of response precision and sensitivity of the sensor 1.

For the application of the sensor in the field of seismic wave detection, excellent results have been obtained with profiles constituted by one or more circular arcs, which have for example radii comprised between 15 and 200 millimeters.

On the bottom 5 of the seat 3 there is at least one first circuit 7, which is constituted by a first track 7a and by a second track 7b, both of which are made of electrically conducting material, constituted for example by a silver compound that is commonly used in screen printing and is deposited by means of an appropriate screen printing method.

The first track 7a can be shaped like a disk or circle, is arranged coaxially with respect to the axis 4 of the seat 3, and has a first appendage 7c, also made of the same material, that protrudes radially from it and reaches, at one of its ends 7d, the upper face 2a of the container 2, on the outside of the seat 3.

The second track 7b, made of a material that is similar to the one used for the first track 7a, is shaped like a circular arc, is concentric to the first track 7a, and is arranged externally to it at a minimal distance so as to not be in contact with it.

In particular, the second track 7b is arranged so that the region in which it is open is located at the first appendage 7c of the first track 7a, so as to be insulated electrically from them.

Advantageously, the circular arc along which the second track 7b lies has a breadth that leaves out only the region needed to avoid electrical contact with the first appendage 7c, for example approximately equal to 7/8 (seven eighths) of the full circle or more.

A second appendage 7e protrudes from one end of the second track 7b, is preferably parallel to the first tab 7c, and likewise reaches, at an end 7f, the surface 2a of the container 2, outside the seat 3.

The first circuit 7 is accordingly open, since the first track and the second track are not in contact with each other in any point, and has two terminals, constituted by the ends 7d and 7f of the first and second appendages, which can be placed in contact with an electronic device for processing electrical signals by means of a terminal strip 8 and electrical conductors.

A second circuit 9 can also be provided on the bottom 5 of the seat 3 and is composed of a third track 9a and of a fourth track 9b, likewise provided by depositing an electrically conducting material.

The third track is shaped like a circular arc, is arranged concentrically with respect to the first and second tracks 7a and 7b, and is accordingly coaxial to the axis 4 of the seat 3 and located at a preset distance from the second track 7b, so that a first gap 10, substantially shaped like a circular arc and on which no conducting material is deposited, is formed between said second and third tracks.

Like the second track, the third track 9a also has an extension that leaves out only the region required to avoid electrical contact with the first and second appendages 7c and 7e.

A third appendage 9c, arranged parallel to the first and second appendages, protrudes from one end of the third track 9a and reaches, at one of its ends 9d, the surface 2a of the container 2 outside the seat 3.

The fourth track 9b is shaped like a circular arc, is concentric with respect to the third track 7a, and is arranged externally thereto at a minimal distance, so that no contact with it occurs.

The fourth track is arranged on the bottom 5 of the seat 3, so that one of its ends is in contact with the second appendage 7e, while its extent is such as to completely surround the third track 9a, leaving free only the region needed to avoid making contact with the first and third tracks 7c and 9c.

A third circuit 11, composed of a fifth track 11a and a sixth track 11b, likewise provided by depositing an electrically conducting material, can also be provided on the bottom 5 of the seat 3.

In a manner similar to what has been described above with regard to the first and second circuits, the fifth track is shaped like a circular arc and is arranged concentrically with respect to the first, second, third and fourth tracks, and is therefore coaxial with respect to the axis 4 of the seat 3 and located at a preset distance from the fourth track 9b, so that a second gap 12, shaped substantially like a circular arc, on which no conducting material is deposited is formed between said fourth track and said fifth track.

In an advantageous arrangement of the tracks, the second gap 12 is larger, in a radial direction, than the first gap 10, so that the distance between the fourth track 9b and the fifth track 10a is larger than the distance between the second track 7b and the third track 9a.

The fifth track 11 a has an extension that leaves out only the region needed to avoid electrical contact with the first, second and third appendages 7c, 7e and 9c.

A fourth appendage 11c, arranged parallel to the first, second and third appendages, protrudes from one end of the fifth track 11a and reaches, at one of its ends 11d, the surface 2a of the container 2, outside the seat 3.

The sixth track 11b is shaped like a circular arc, is concentric with respect to the fifth track 11a, and is arranged externally to it at a minimal distance so as to not be in contact with it.

The sixth track is arranged on the bottom 5 of the seat 3, so that one of its ends is in contact with the second appendage 7e, while its extension is such as to surround completely the fifth track 11a, leaving free only the region required to avoid making contact with the first, third and fourth tracks 7c, 9c and 11c.

In the embodiment shown in the figures, externally with respect to the third circuit 11, on the bottom 5 of the seat 3, there is a fourth circuit 13, constituted by a seventh track 13a and an eighth track 13b, and there is a fifth circuit 14, which is constituted by a ninth track 14a and a tenth track 14b.

The fourth and fifth circuits are provided like the second and third circuits, said seventh, eighth, ninth and tenth tracks being constituted by circular arcs and being concentric with respect to each other and to the tracks arranged further inward with respect to them, so as to be coaxial with respect to the axis 4 of the seat 3.

In particular, the seventh track 13a and the ninth track 14a respectively have, at one of the ends, a fifth appendage 13c and a sixth appendage 14c, which protrude parallel to the first appendage 7c, respectively at one of the ends 13d and 14d, up to the surface 2a of the container 2, outside the seat 3.

The eighth track 13b and the tenth track 14b are arranged respectively externally with respect to the seventh and ninth tracks, at a minimal distance from them required to avoid their contact, so as to be electrically insulated from them.

The eighth and tenth tracks are arranged so as to surround approximately completely the seventh and ninth tracks, one of their ends being arranged in contact with the second appendage 7e.

The fourth circuit 13 is arranged at a chosen radial distance from the third circuit 11, so that a third gap 15 is formed between them.

Likewise, a fourth gap 16 is formed between the fourth circuit 13 and the fifth circuit 14.

Advantageously, the fourth gap 16 may be radially larger than the third gap 15, which in turn can be larger than the second gap 12, so that said gaps formed between two radially consecutive circuits increase in size as one moves toward the outside of the seat 3.

In order to achieve excellent precision and a wide operating range of the sensor 1, the circuits can be arranged on the bottom 5 of the concave seat 3 in a number that is sufficient to affect the entire extension of the bottom 5, said number being variable according to the dimensions of the seat 3 and to the arrangement of the gaps formed between two consecutive circuits.

In general, each circuit is composed of two tracks shaped like a sector, which are concentric and mutually spaced by a minimal distance required to prevent their mutual electrical contact; one of the tracks, the outermost one in the example, is in contact with a first tab, which acts as ground for an electronic device for processing the signal supplied by the sensor 1, while the second track, for example the innermost one, has a tab that reaches the outside of the seat 3, where it is arranged in contact with an input of said signal processing device.

Advantageously, the width of each one of the tracks provided on the bottom 5 of the seat 3 can be comprised for example between 0.7 millimeters and 1 millimeter, while the radial distance between two tracks that belong to the same circuit may conveniently be comprised for example between 0.3 and 0.5 millimeters.

A convenient value for the outside diameter of the first track 7a is instead comprised by way of example between approximately 3.5 and 5 millimeters.

Each one of such circuits is further arranged concentrically with respect to all the others, and each one is separated from the next, in a radial direction, by a gap whose dimensions can advantageously increase as the distance of the affected circuits with respect to the axis 4 increases.

In an advantageous arrangement of these circuits, the first gap provided between the first and second circuits has a radial width of approximately one millimeter, the second gap has a width of approximately two millimeters, the third gap has a width of approximately three millimeters, and this width accordingly increases by approximately one millimeter between one gap and the next, up to the outermost circuit.

The radial width of the gaps and their rule of radial variation may of course be any, in order to obtain the intended sensitivity and precision from the sensor 1, especially in view of the fact that the distribution of the circuits on the bottom 5 is closely correlated to the radial profile 6 of the bottom.

The sensor 1 further comprises a contact body 17, which is preferably constituted by a ball of electrically conducting material or by a drop of mercury.

The contact body is free to perform a translational movement on the bottom 5 of the seat 3, and its dimensions are such that the surface on which it makes contact or rests on the radial profile 6 is smaller than the width of the first track 7a, so that if the axis of the seat 3 is arranged vertically, it interacts on a region that is completely contained within said first track, according resting only thereon.

The surface with which the contact body 17 rests on the bottom 5 of the seat 3 is greater than the radial distance that separates the two concentric tracks of each circuit, so that it is possible to provide an electrical contact between them, but is in any case smaller than the radial distance that separates two consecutive circuits.

For this purpose, it has been demonstrated that the solution that uses a drop of mercury to provide said contact body is the most effective, since its contact surface has dimensions that are suitable to establish safe contact between two tracks of the same contact, ensuring at the same time easy translational motion on the bottom of the seat 3.

The seat 3 can be closed in an upper region by means of a lid 18, which is made of insulating and transparent material, preferably plastic material, so as to protect the hollow seat 3 and the contact body 17 arranged inside it against external agents, which may cause the motion of said body to become uneven, at the same time allowing direct viewing from the outside of said contact body and of the circuits provided on the bottom of the seat.

Conveniently, the lid 18 can be coupled to the container 2 at the upper face 2a of said container by ultrasound welding, thus providing an excellent tightness of the seat 3, which is aimed at preventing even an unintentional escape of the contact body contained therein.

The container 2 has advantageously associated means suitable to allow adjustments of flatness and/or means suitable to keep it suspended with respect to a fixed supporting surface.

In a preferred embodiment, the container 2 rests, by means of a lower end face 19 thereof, on a first plate 20, which is constituted for example by an aluminum lamina rigidly coupled thereto, and the upper surface 21 of which protrudes from the base 19 in at least one point.

Advantageously, the first plate 20 may have a square or rectangular plan shape and may protrude from the base 19 of the container 2 at its four corners, so as to constitute for example four flaps 22.

A hole 23 is formed at each one of the flaps and has an axis that is parallel to the axis 4 of the seat 3; a screw 24 that is completely or partially threaded at its end can be inserted in each one of said holes.

A preferably helical spring 25 is arranged coaxially to the stem 24a of each one of the screws 24 so as to surround part of said stem, a first upper end 25a of which abuts against the lower surface 26 of the plate 20.

The sensor 1 further comprises a fixed support 27, which is constituted for example by a second plate 28, which is preferably flat and is provided with a plurality of bushes 29, which protrude vertically upward, are threaded internally, are equal in number to the screws 24, and are arranged in a manner that duplicates the arrangement of the holes 23 provided in the first plate 20.

The fixed support 27 can be arranged below the first plate 20, so that the bushes 29 are arranged at the holes 23, so that each one accommodates part of the stem of one of the screws 24, so as to provide an interconnection between the container 2 and the fixed support 27.

A second end 25b of one of the springs 25 abuts against the upper surface 29a of each one of the bushes; the springs are thus interposed between the first plate 20 and the second plate 28 and are rigidly coupled in this position around part of the stem 25a of the screws 24.

The second plate 28 can then be fixed to a structure that is rigidly coupled to the ground, to the building or to the machine whose vibrations or movements are to be detected, so that its bushes protrude upward in an approximately vertical direction.

The operation of the sensor 1 according to the invention entails that once the second plate 28 has been fixed as described above, the orientation of the first plate 20 and accordingly of the container 2 that is rigidly coupled thereto is determined precisely by acting on one or more of the threaded screws 24, in the direction of greater or lesser tightening, respectively if one wishes to move one of the flaps 22 closer or further apart with respect to the plate 28, thus producing an upward or downward movement thereof.

The springs 25 also contribute to this adjustment and by acting in contrast with the screws 24 keep the first plate 20 in contact with the heads of the screws 25, supporting the container 2.

It is thus possible to achieve easily an excellent vertical alignment of the axis 4 of the concave seat 3 that contains the contact body 17, which is visible from the outside, particularly from above, by way of the fact that the container 2 and the lid 18 are made of transparent material.

By way of this adjustment possibility, it is therefore not necessary to orientate precisely the second plate 28, since any misalignment thereof can be recovered easily.

By acting on the screws 24, which are contrasted by the springs 25, it is in fact possible to adjust the sensor 1 so that the contact body 17, if there are no external forces, is located exactly at the center of the seat 3, at the center of the bottom 5 thereof.

In this position, the contact body 17 rests only on the first track 7a, since its diameter is smaller than the outside diameter of said first track, so that all the circuits provided on the bottom 5 of the seat 3 are open because no contact occurs between the tracks that compose them.

If the building or machine to which the second plate 28 is rigidly coupled transmits vibrations to it, said vibrations propagate through the screws 24 to the container 2, which is thus moved.

The contact body 17, which is not rigidly coupled to the container 2 and which owing to its teardrop or spherical shape can move on the bottom 5 of the seat 3 with very low friction, performs a relative motion with respect to said seat, rising along the bottom 5 by an extent that is proportional to the intensity of the force applied to said sensor.

In the case of a vibratory stress, the contact body 17 performs, with respect to the bottom 5, an alternating rising and falling motion on a plurality of portions of said bottom.

During these movements, as soon as they exceed a minimum threshold and regardless of the direction along which they occur, the contact body 17 crosses at least one of the circuits provided on the bottom of the seat 3, providing a contact between the two concentric tracks that compose them.

In this manner, it is possible to transmit an electrical pulse to an electrical signal processing device, which in turn can activate an alarm device, such as for example a sound or light source, warning the occupants of a building or anyone in the vicinity of the imminence of a potential danger.

The circular plan shape of the seat 3 and the arrangement of the likewise circular tracks on its bottom 5 allow the sensor 1 to detect movements and oscillations in any direction of the plane, eliminating the need to use at least two sensors arranged in two different directions, as provided by the background art.

The initial calibration, by way of which the contact element 17 is centered perfectly on the bottom 5 of the seat 3, allows a uniform response of the instrument along any direction of a plane.

The sensor 1 may further emit a signal that is proportional to the amplitude of the oscillations by which it is affected, since according to the pair of tracks short-circuited by the contact element 17 it is possible to determine the height to which said contact element has risen along the bottom 5 of the seat 3.

Accordingly, the response curve of the sensor can be chosen according to the operating requirements by acting on the radial profile 6 of the bottom 5, particularly on its curvature, and on the radial distance at which the circuits are arranged.

In an advantageous arrangement of said circuits, the distance between each pair of tracks that form a circuit and the next pair increases from the inward circuits to the outward circuits; however, excellent results can be achieved with different arrangements.

Such sensor can be used advantageously for prompt sensing of seismic phenomena, since it is capable of reacting when affected by the first oscillations, which often precede the catastrophic event, allowing anyone who is in the vicinity to react rapidly.

It has thus been found that the invention has achieved the intended aim and objects, a sensor for detecting vibrations, particularly seismic waves, having been devised which is capable of providing a signal that is derived from the sensing of an acceleration imparted thereto along any direction of a plane.

Another object achieved by the invention is to be constructively simple, compact and easy to calibrate.

Another important object that is achieved is to provide a sensor that can offer an immediate response to an externally originated force.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. TV2004A000012 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sensor for detecting vibrations, particularly seismic waves, **characterized in that** it is constituted by a container, on an upper face of which there is a concave seat that has a circular plan shape and can be closed in an upper region by means of a lid, and on the bottom of which there is at least one first circuit, which is constituted by at least two tracks, made of conducting material and arranged along mutually concentric circles, which are coaxial to the axis of said cavity and are kept mutually apart, a contact body made of electrically conducting material being free to move along said bottom, the surface with which said contact body rests on said bottom being larger than the mutual distance between the tracks of said at least two tracks.

2. The sensor according to claim 1, **characterized in that** said bottom of said seat has a curved or straight radial profile, the lower point of which is located at said axis of said seat and is electrically nonconducting.

3. The sensor according to claims 1 and 2, **characterized in that** said radial profile is constituted by a single circular arc having a radius preferably comprised, by way of example, between approximately fifteen millimeters and approximately two hundred millimeters.

4. The sensor according to claims 1 and 2, **characterized in that** said radial profile is constituted by two or more portions of a circle having different radii, which are adequately blended together, said radii preferably assuming values comprised, by way of example, between approximately fifteen millimeters and approximately two hundred millimeters.

5. The sensor according to claims 1 and 2, **characterized in that** said profile is constituted by curves having a variable radius, preferably parabolic or hyperbolic arcs, which are mutually blended, or by circular arcs having different radii.

6. The sensor according to one or more of the proceeding claims, **characterized in that** said contact body preferably has a spherical or teardrop shape.

7. The sensor according to claims 1 and 6, **characterized in that** said container is made of transparent material, preferably plastic material.

8. The sensor according to claims 1 and 7, **characterized in that** said at least one first circuit is constituted by a first track and a second track, both of which are made of electrically conducting material, preferably constituted by a silver compound deposited with a screen-printing process.

9. The sensor according to claims 1 and 8, **characterized in that** said first track is shaped like a disk or a circle, is arranged coaxially to said axis of said seat, and has a first appendage, which is made of the same material as said first track, protrudes radially from it, and reaches, at one of its ends, said upper face of said container outside said seat.

10. The sensor according to claims 1 and 9, **characterized in that** said second track, made of a material that is similar to the material used for said first track, is shaped like a circular arc, is concentric with respect to said first track, and is arranged externally thereto at a minimal distance that is sufficient to avoid electrical contact with it.

11. The sensor according to claims 1 and 10, **characterized in that** the region in which said second track is open is located at said first appendage of said first track, so as to be electrically insulated therefrom.

12. The sensor according to claims 1 and 11, **characterized in that** said second track runs along a circular arc whose amplitude is preferably approximately equal to 7/8 (seven eighths) of the full circle, or more, leaving out only the region needed to avoid electrical contact with said first appendage.

13. The sensor according to claims 1 and 12, **characterized in that** a second appendage protrudes from one end of said second track, is preferably parallel to said first appendage, and likewise reaches, at one of its ends, said upper face of said container, outside said seat.

14. The sensor according to claims 1 and 13, **characterized in that** said first and second ends of said first and second appendages are arranged in contact with an electronic device for processing electrical signals by means of a terminal strip and electrical conductors.

15. The sensor according to claims 1 and 14, **characterized in that** a second circuit is provided on said bottom of said seat and is composed of a third track and a fourth track, both made of an electrically conducting material.

16. The sensor according to claims 1 and 15, **characterized in that** said third track is shaped like a circular arc, is arranged concentrically with respect to said first and second tracks, is coaxial to said axis of said seat, and is arranged at a preset distance from said second track, so that a first gap shaped substantially like a circular arc on which no conducting material is deposited is formed between said second track and said third track.

17. The sensor according to claims 1 and 16, **characterized in that** said third track covers a circular arc whose amplitude is preferably equal to approximately 7/8 (seven eighths) of the full circle or more, leaving out only the region needed to avoid electrical contact with said first and second appendages.

18. The sensor according to claims 1 and 17, **characterized in that** a third appendage, arranged parallel to said first and second appendages, protrudes from one end of said third track and reaches, at one of its ends, said upper face of said container, outside said seat.

19. The sensor according to claims 1 and 18, **characterized in that** said fourth track is shaped like a circular arc, is concentric with respect to said third track, and is arranged externally thereto at a minimal distance that is sufficient to avoid electrical contact with said third track.

20. The sensor according to claims 1 and 19, **characterized in that** said fourth track almost completely surrounds said third track, leaving free only the region needed to avoid contact with said first and third tracks, while one end of said fourth track is placed in contact with said second appendage.

21. The sensor according to claims 1 and 20, **characterized in that** on said bottom of said seat there is a number of circuits that is sufficient to affect the entire extension of said bottom, depending on the dimensions of said seat and on the arrangement of said gaps formed between two consecutive said circuits, each one of said circuits being composed of two tracks shaped like a circular sector, which are concentric and coaxial with respect to said axis of said seat and are mutually spaced by a minimal distance needed to prevent their mutual electrical contact, one of said tracks being in contact with a first tab, which acts as ground for an electronic device for processing the signal provided by said sensor, the second track being provided with a tab that reaches the outside of said seat, where it is placed in contact with an input of said signal processing device.

22. The sensor according to claims 1 and 21, **characterized in that** the width of each one of said tracks provided on said bottom of said seat is, by way of example, comprised between approximately 0.7 millimeters and approximately one millimeter, while the radial distance between two tracks that belong to the same circuit is comprised between approximately 0.3 millimeters and approximately 0.5 millimeters.

23. The sensor according to claims 1 and 22, **characterized in that** the outside diameter of said first track is comprised between approximately 3.5 millimeters and approximately 5 millimeters.

24. The sensor according to claims 1 and 23, **characterized in that** each one of said circuits is arranged concentrically with respect to all the others, each one being separated from the next in the radial direction by a gap whose size increases advantageously as the distance of said circuits with respect to said axis increases.

25. The sensor according to claims 1 and 24, **characterized in that** said first gap provided between said first and second circuits has a width, measured radially, that is equal to approximately one millimeter, a second gap has a width of approximately two millimeters, and a third gap has a width of approximately three millimeters, said width increasing by approximately one millimeter between one gap and the next up to the outermost circuit.

26. The sensor according to claims 1 and 25, **characterized in that** said supporting surface of said contact body is smaller than the width of said first track, said contact body interacting, when said axis of said seat is arranged vertically, on a region that is contained completely within said first track and therefore resting solely thereon.

27. The sensor according to claims 1 and 26, **characterized in that** said lid is made of insulating and transparent material, preferably plastic material, and can be connected to said container by means of an ultrasound welding process.

28. The sensor according to claims 1 and 27, **characterized in that** means suitable to allow adjustment of planarity and/or means suitable to keep it suspended with respect to a fixed supporting surface are associated with said container.

29. The sensor according to claims 1 and 28, **characterized in that** said container rests, by means of a lower base, on a first plate, which is constituted by an aluminum lamina that is coupled thereto and the upper surface of which protrudes from said base in at least one point.

30. The sensor according to claims 1 and 29, **characterized in that** said first plate has a square or rectangular plan shape and protrudes from said base of said container at its four corners, so as to constitute four flaps.

31. The sensor according to claims 1 and 30, **characterized in that** a hole is provided at each one of said flaps and has an axis that is parallel to said axis of said seat, a screw that is completely or partially threaded at its tip being insertable in each one of said holes.

32. The sensor according to claims 1 and 31, **characterized in that** a preferably helical spring is arranged coaxially to the stem of each one of said screws so as to surround part of said stem, a first upper end of said spring abutting against a lower surface of said plate.

33. The sensor according to claims 1 and 32, **characterized in that** it comprises a fixed support, which is preferably constituted by a second flat plate provided with a plurality of bushes that protrude vertically upward, are threaded internally, are equal in number to said screws, and are arranged so as to match the arrangement of said holes provided in said first plate.

34. The sensor according to claims 1 and 33, **characterized in that** said fixed support is arranged below said first plate, the bushes being arranged at said holes, so that each bush accommodates part of said stem of one of said screws.

35. The sensor according to claims 1 and 34, **characterized in that** a second end of one of said springs abuts against the upper surface of each one of said bushes, said springs being thus interposed between said first plate and said second plate and being coupled in said position around part of said stem of said screws.

36. The sensor according to claims 1 and 35, **characterized in that** said second plate can be fixed to a structure that is rigidly coupled to the ground, to the building or to the machine whose vibrations or movements are to be detected, so that said bushes protrude approximately vertically upward.
